# EUROPEAN PATENT APPLICATION

(11) **EP 2 741 573 A1**
(43) Date of publication of application: **11.06.2014**
(21) Application number: 13196107.0
(22) Date of filing: 06.12.2013
(51) Int. Cl.: H05B 6/14, B23P 25/00, B23P 23/02, B23B 23/00, B23Q 37/00, B23Q 39/02, B23P 23/04

(54) **High-frequency induction heating device**

(30) Priority: 07.12.2012 TW 101146096
(71) Applicant: YI-DA Precision Machinery Co., Ltd., 41146 Taichung City (TW)
(72) Inventor: Pu, Hank, 41146 Taichung City (TW)
(74) Representative: Jansen, Cornelis Marinus

(57) **Abstract**

A high-frequency induction heating device for mounting on a machine tool is disclosed. The machine tool is capable of performing one of lathing, milling and grinding processes on a workpiece (7). The high-frequency induction heating device includes a socket (51) adapted to be disposed on a tailstock unit (3) of the machine tool, and at least one induction heating member (52) that is connectable with the socket (51) and that has an induction coil (521) defining a through hole (520) for extension of the workpiece (7) therethrough. The induction coil (521) is capable of generating high-frequency waves through an electromagnetic effect to heat the workpiece (7).

## Description

The invention relates to a high-frequency induction heating device, more particularly to a high-frequency induction heating device that is adapted to be detachedly mounted to a machine tool and that has a plurality of rapidly replaceable heating members.

Heating treatment is an important step for a machining process to improve mechanical properties or cutting workability of a workpiece subjected to the machining process or to eliminate residual stress in the workpiece. A high-frequency induction heating process is one kind of heat treatment that uses high frequency electricity to heat the electrically conductive workpiece through an electromagnetic effect. The workpiece is placed in an induced electric field formed by an induction coil. The polar molecules of the workpiece vibrate incessantly under the action of high-frequency waves so as to generate frictional heat to increase the temperature of the workpiece.

However, at present, there is no machine tool with a heat treatment function, so that a separate heating device must be installed. Moreover, to transfer the workpiece between the machine tool and the heating device takes a lot of time and labor, and hence, is not economically efficient. As such, how a machine tool can efficiently and quickly perform heat treatment of workpieces of different sizes is an issue to be resolved by the present invention.

Therefore, an object of the present invention is to provide a high-frequency induction heating device that can at least alleviate the aforesaid drawback of the prior art.

According to the present invention, a high-frequency induction heating device for mounting on a machine tool,which is capable of performing one of lathing, milling and grinding processes on a workpiece, includes a socket adapted to be disposed on a tailstock unit of the machine tool, and at least one induction heating member that is connectable with the socket and that has an induction coil defining a through hole for extension of the workpiece therethrough. The induction coil is capable of generating high-frequency waves through an electromagnetic effect to heat the workpiece.

Other features and advantages of the present invention will become apparent in the following detailed description of the preferred embodiment with reference to the accompanying drawings, of which:
Figure 1 is a perspective view of a machine tool incorporating a high-frequency induction heating device according to the preferred embodiment of the present invention;
Figure 2 is an enlarged perspective view of the preferred embodiment, illustrating how a replacement unit clamps an induction heating member;
Figure 3 is a front view, illustrating an abutment unit being exposed from a tailstock;
Figure 4 is a view similar to Figure 2, but illustrating how the induction heating member is moved to a position above a socket;
Figure 5 is a view similar to Figure 4, but illustrating how the replacement unit releases the induction heating member; and
Figure 6 is a front view, illustrating how a workpiece is positioned on the induction heating member.

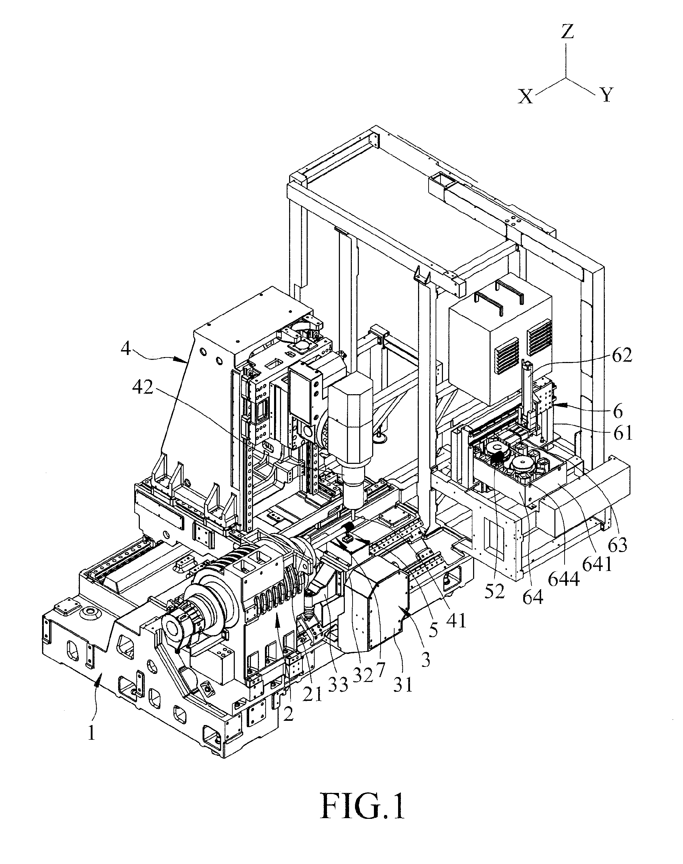

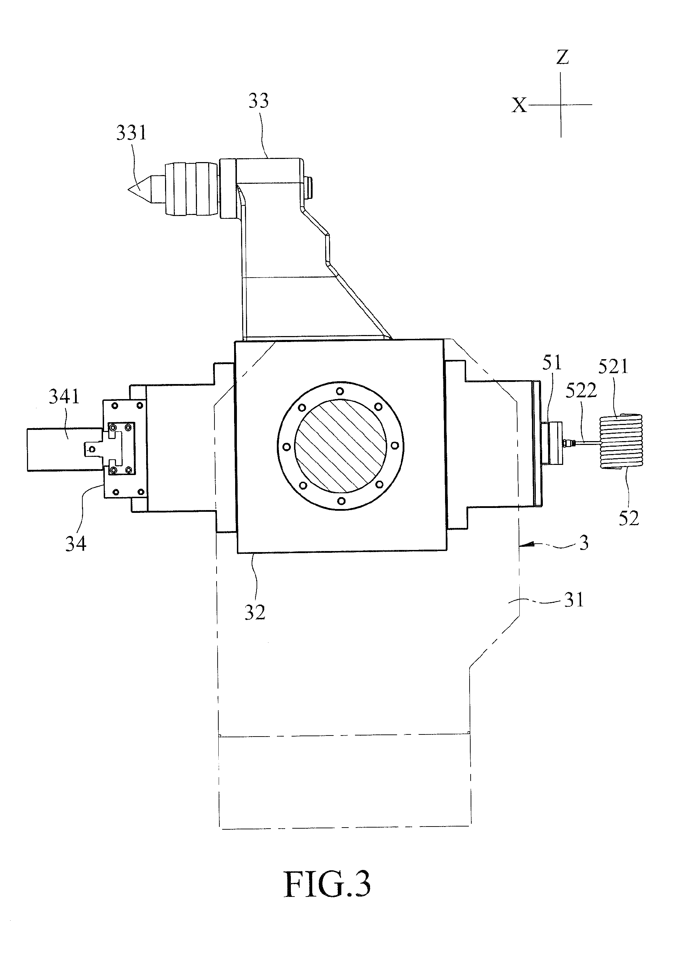

Referring to Figures 1 to 3, the preferred embodiment of a high-frequency induction heating device according to the present invention is shown to be assembled to a machine tool. The machine tool includes a base seat 1, a clamping unit 2, a tailstock unit 3 and a shaft unit 4. The clamping unit 2 is slidable on the base seat 1 along an X-axis and is disposed proximate to one end of the base seat 1. The clamping unit 2 includes a chuck 21 for clamping one end portion of a workpiece 7. The tailstock unit 3 includes a tailstock 31 that is slidable on the base seat 1 and that is spaced apart from the chuck 21, a rotating seat 32 that is rotatably disposed on the tailstock 31 and that is rotatable about a Y-axis which is perpendicular to the X-axis, and an abutment unit 33 and a clamping assembly 34 that are mounted on the rotating seat 32 and that respectively support and clamp the workpiece 7. The abutment unit 33 has a needle 331 abutting against another end portion of the workpiece 7. The shaft unit 4 is slidable on the base seat 1, and includes a shaft 42 and a machining member 41 that is connected to the shaft 42. The machining member 41 may be a milling cutter, a lathe tool, or a grinding wheel for performing a milling, a lathing or a grinding operation on the workpiece 7.

The high-frequency induction heating device of this invention includes a heating unit 5 and a replacement unit 6.

The heating unit 5 includes a socket 51 connected to the rotating seat 32, and a plurality of induction heating members 52 (only one is shown), each of which is selectively inserted into the socket 51. The socket 51 is formed with a pair of insertion holes 511, and is angularly spaced apart from the abutment unit 31 and the clamping assembly 34 with respective to the Y-axis. Each of the induction heating members 52 includes an induction coil 521 that defines a through hole 520 for extension of the workpiece 7 therethrough and that generates high-frequency waves through an electromagnetic effect for heating the workpiece 7. Each induction heating member 52 further includes a pair of inserting pins 522 that are formed on a midlle section of the induction coil 521, that are spaced apart from each other along the Y-axis and that are insertable into the respective insertion holes 511. A hole diameter of the through hole 520 depends upon the size of the workpiece 7.

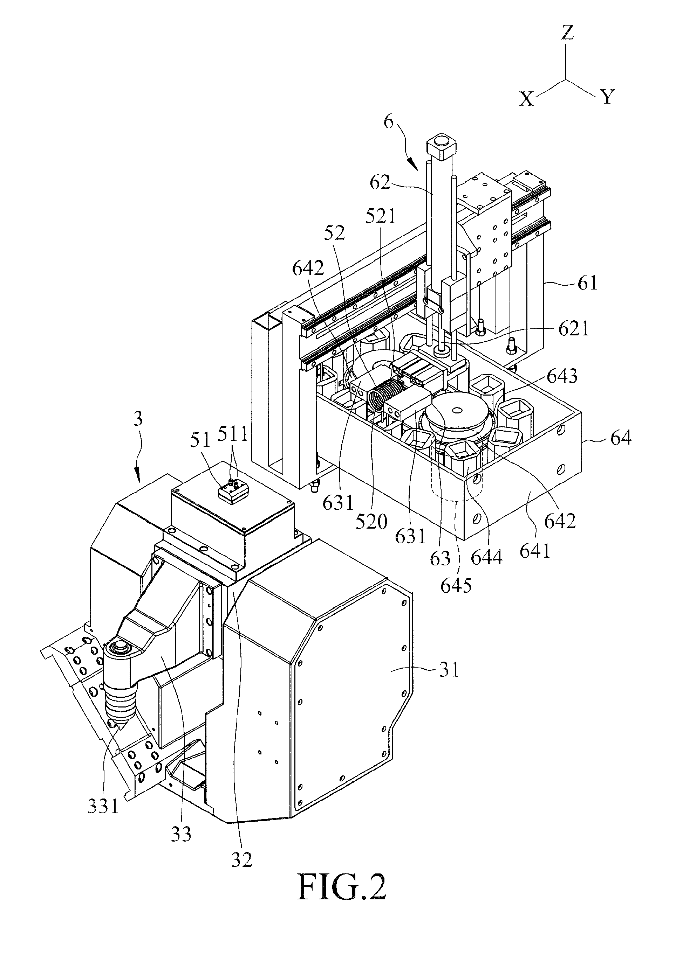

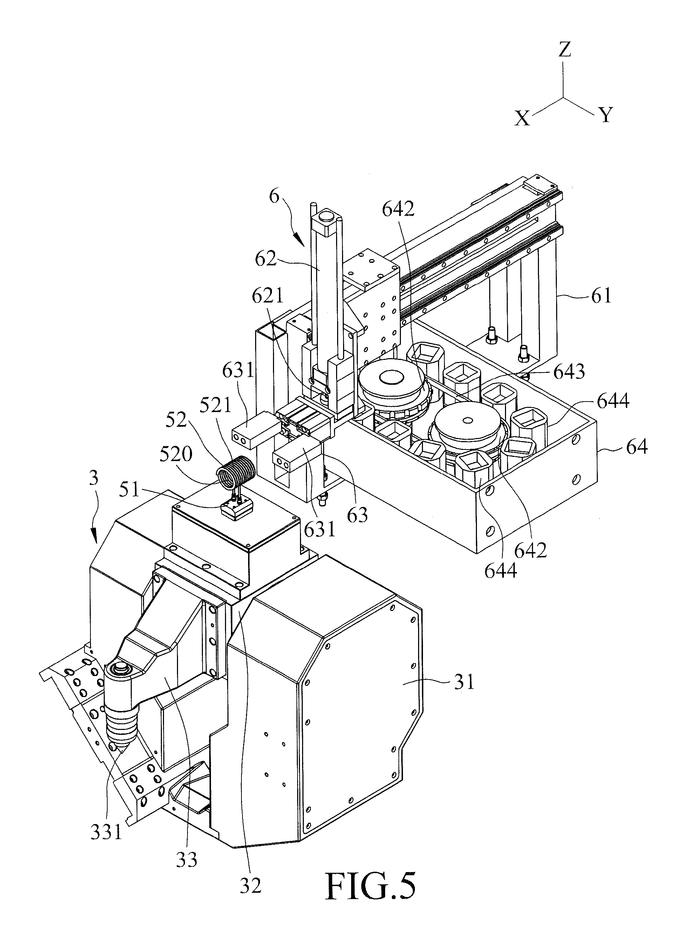

The replacement unit 6 includes a rail frame 61 that extends along the X-axis and that is disposed on a lateral side of the tailstock 31, a pressure cylinder unit 62 slidable on the rail frame 61, a clamping arm unit 63 and a tool receptacle 64 for accommodating the induction heat members 52. The pressure cylinder unit 62 has a piston rod 621 reciprocating along a Z-axis that is perpendicular to the X-axis and the Y-axis and forming a link with the clamping arm unit 63. The clamping arm unit 63 is movable along the rail frame 61 relative to the tailstock 31, and is driven by the piston rod 621 of the pressure cylinder unit 62 to move between a first position (see Figure 2), where the clamping arm unit 63 clamps a selected one of the induction heating members 52, and a second position (see Figure 5), where the clamping arm unit 63 releases the selected induction heating member 52. The clamping arm unit 63 includes a pair of spaced-apart clamping arms 631 that are movable relative to each other so as to adjust a distance therebetween to clamp or release the selected induction heating member 52.

The tool receptacle 64 is disposed in a position corresponding to the first position of the clamping arm unit 63, and includes a case 641 having a top opening, a pair of driving gears 642 rotatably mounted in the case 641, a driven member 643 connected between the driving gears 642, a plurality of sleeves 644 that are connected to an outer surface of the driven member 643 and that form a link with the driven member 643, and a motor 645 for driving one of the driving gears 642. Each of the sleeves 644 receives a respective one of the induction heating members 52. In this embodiment, the driving gears 642 are configured as chain gears, and the driven member 643 is configured as a chain. It should be noted that, in order to simplify the illustration, only one sleeve 644 received in the respective induction heating member 52 is shown in Figure 1. In the actual application, all of the sleeves 644 respectively receive the induction heating members 52 having different specifications.

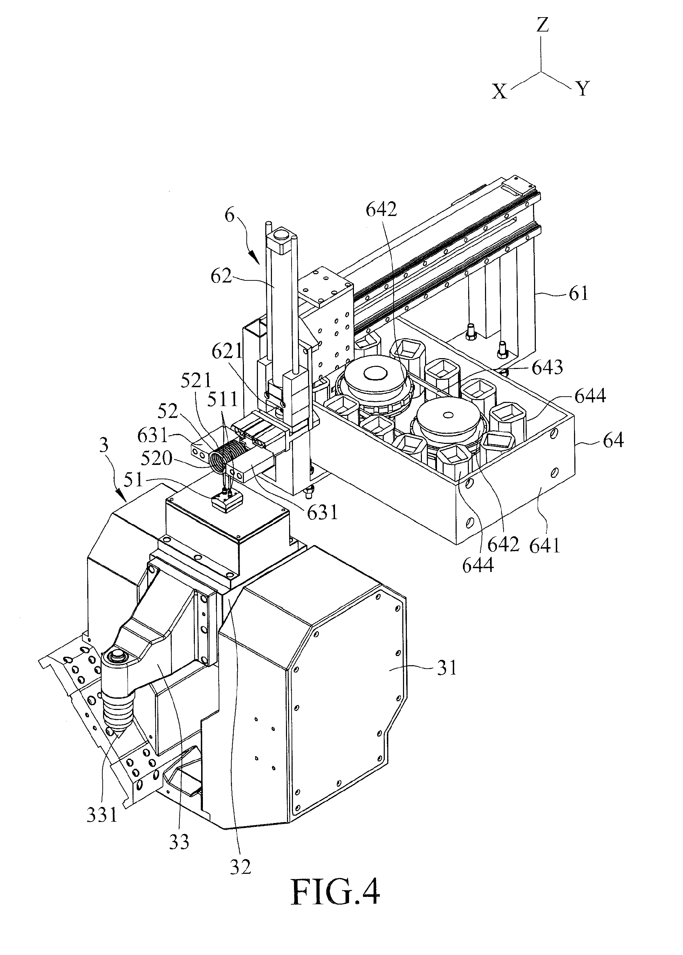

Referring to Figures 4 and 5, whether the high-frequency induction heating treatment is conducted before or after the machining procedure, the high-frequency induction heating treatment procedure can be accomplished by first driving the tailstock 31 to move close to the replacement unit 6, and driving the rotating seat 32 to rotate until the socket 51 is exposed from the tailstock 31 along the Z-axis and aligned with the workpiece 7. The pressure cylinder unit 62 together with the clamping arm unit 63 is then driven to move on the rail frame 61 along the X-axis. The clamping arm unit 63 is driven by the piston rod 621 to move along the Z-axis to the first position so as to clamp the induction coil 521 of a selected induction heatingmember 52 with the clamping arms 631, after which the clamping arm unit 63 is driven to move along the X-axis toward and above the socket 5 so as to align the inserting pins 522 of the induction heating member 52 with the respective insertion holes 511. Finally, the clamping arm unit 63 is driven to move downward along the Z-axis until the inserting pins 522 is inserted into the respective insertion holes 511, thereby electrically connecting the induction heating member 52 with the socket 51. The clamping arm unit 63 is then driven to move to the second position to release clamping of the induction heating member 52 by the clamping arms 631.

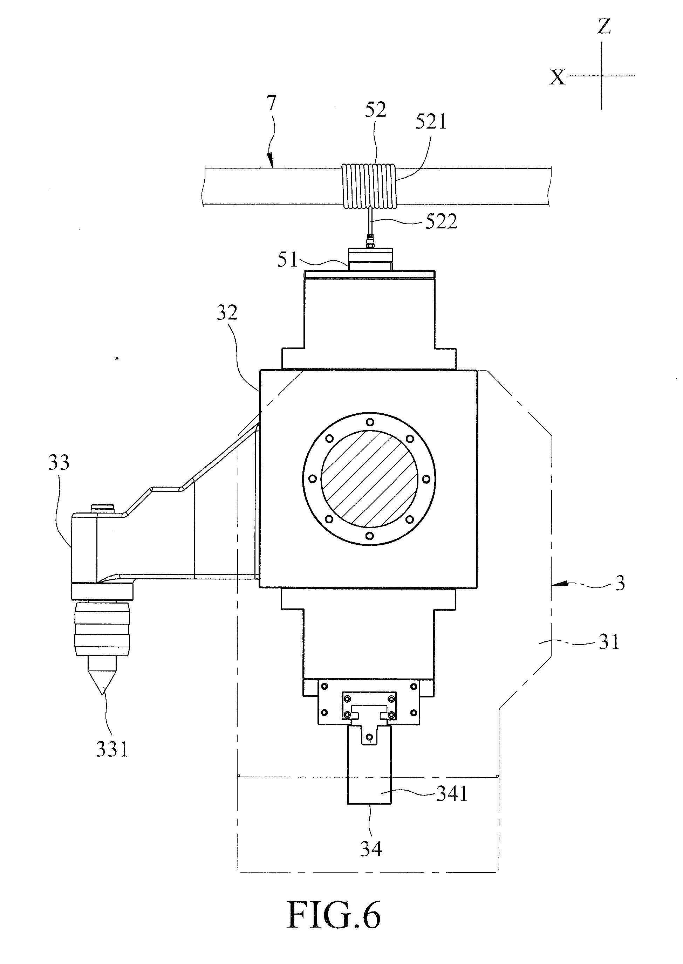

Referring to Figure 6, during the high-frequency induction heating treatment, the workpiece 7 is simply inserted through the through hole 520 of the induction heating member 52 so that the workpiece 7 is surrounded by the induction heating member 52, and is adjusted until the portion of the workpiece 7 to be heated is aligned with the induction coil 521. The portion of the workpiece 7 can then be heated in an induced electric field formed by the induction coil 521 through the electromagnetic effect.

Referring back to Figures 2 to 5, similarly, to change the induction heating member 52, the tailstock 31 is driven to move close to the replacement unit 6, after which the clamping arm unit 63 is driven to clamp the induction heating member 52 with the clamping arms 631 and remove the same from the socket 51. Then, the clamping arm unit 63 is driven to move to a position above the tool receptacle 64 so as to align the induction heating member 52 with an empty one of the sleeves 644. Next, the clamping arm unit 63 is driven to move downward along the Z-axis until the inserting pins 522 are inserted into the empty sleeve 644. Finally, the clamping arm unit 63 is driven to release the induction heating member 52 and is then moved upward along the Z-axis for a next cycle. In the next cycle, the driving gears 642 rotate the sleeves 644 until a selected one of the induction heating members 52 is aligned with the clamping arm unit 63. The aforementioned inserting and releasing operations of the induction heating member 52 with the socket 51 can be repeated to achieve the purpose of replacing the induction heating member 52 for heating different sizes of workpieces 7.

The advantage of this invention resides in that, through engagement of the induction heating member 52 with the socket 51 by insertion, the machine tool that incorporates the high-frequency induction heating device of this invention is capable of carrying out heat treatment on the workpieces 7 with different sizes by quick replacement of the different induction heating members 52. As such, the convenience and practicality of the machine tool is significantly increased.

## Claims

1. A high-frequency induction heating device for mounting on a machine tool, which has a tailstock unit (3) and which is capable of performing one of lathing, milling and grinding processes on a workpiece (7), said high-frequency induction heating device **characterized by**:
a socket (51) for connection with the tailstock unit (3); and
at least one induction heating member (52) that is connectable with said socket (51) and that has an induction coil (521) defining a through hole (520) for extension of the workpiece (7) therethrough, said induction coil (521) being capable of generating high-frequency waves through an electromagnetic effect.

2. The high-frequency induction heating device of Claim 1, **characterized in that** said high-frequency induction heating device includes a plurality of said induction heating members (52), said through holes (520) of said induction heating members having different diameters.

3. The high-frequency induction heating device of Claim 1, **characterized in that** said socket (51) is formed with apairofinsertionholes (511) and said induction heating member (52) further includes a pair of inserting pins (522) that are insertable into said insertion hole (511), respectively.

4. The high-frequency induction heating device of Claim 3, further **characterized by** a replacement unit (6) including a rail frame (61) that extends along an X-axis and that is adapted to be disposed on a lateral side of the tailstock unit (3), a pressure cylinder unit (62) slidable on said rail frame (61), and a clamping arm unit (63) that is movable along said rail frame (61) relative to the tailstock unit (3) and that is driven by said pressure cylinder unit (62) to move between a first position, where said clamping arm unit (63) clamps a selected one of said induction heating members (52), and a second position, where said clamping arm unit (63) releases said selected induction heating member (52).

5. The high-frequency induction heating device of Claim 4, **characterized in that** said clamping arm unit (63) includes a pair of spaced-apart clamping arms (631) that are movable relative to each other so as to adjust a distance therebetween to clamp the selected one of said induction heating members (52).

6. The high-frequency induction heating device of Claim 4, **characterized in that** said replacement unit (6) further includes a tool receptacle (64) for accommodating said induction heating members (52), said tool receptacle (64) being disposed in a position corresponding to said first position of said clamping arm unit (63).

7. The high-frequency induction heating device of Claim 6, **characterized in that** said tool receptacle (64) includes a case (641) having a top opening, a pair of driving gears (642) rotatablymountedinsaidcase (641), a driven member (643) connected between said driving gears (642), a plurality of sleeves (644) that are connected to an outer surface of said driven member (643) and that form a link with said driven member (643), and amotor (645) for driving one of said driving gears (642), each of said sleeves (644) receiving a respective one of said induction heating members (52).
